Europäisches Patentamt

European Patent Office

Office européen des brevets

(19)

(11) Numéro de publication: **0 099 295**
**A2**

(12)    # DEMANDE DE BREVET EUROPEEN

(21) Numéro de dépôt: **83401403.7**

(22) Date de dépôt: **07.07.83**

(51) Int. Cl.³: **F 24 D 19/10**

(30) Priorité: **09.07.82 FR 8212084**

(43) Date de publication de la demande:
**25.01.84 Bulletin 84/4**

(84) Etats contractants désignés:
**AT BE CH DE GB LI LU NL**

(71) Demandeur: **Rehau Plastiks AG + Co**
**Rheniumhaus**
**D-8673 Rehau(DE)**

(72) Inventeur: **Elles, Yves Michel Robert**
**18 Chemin du Moulin**
**F-57320 Bouzonville(FR)**

(74) Mandataire: **Bourgognon, Jean-Marie et al,**
**Cabinet Flechner 22, Avenue de Friedland**
**F-75008 Paris(FR)**

(54) **Installation de chauffage de bâtiments par le sol.**

(57) Un circuit (4) issu d'une vanne mélangeuse à trois voies débouche dans un collecteur (11) commun à des boucles (12, 13, 14) de chauffage par le sol qui y sont raccordées en parallèle. Sur chaque boucle (12, 13, 14) de chauffage est montée une vanne (15, 16, 17) de réglage de débit, comman- dée par une sonde (21, 22, 23) de la température de la pièce du bâtiment à laquelle est affectée la boucle (12, 13, 14) de chaffage.

EP 0 099 295 A2

## Installation de chauffage de bâtiments par le sol.

La présente invention est relative à une installation de chauffage de bâtiments par le sol suivant le préambule de la revendication 1.

Au DE-B-2 916 169, on décrit une installation de ce type. La régulation s'y effectue par modification de la température de l'eau dans le conduit d'alimentation (conduit 17) des circuits de chauffage par le sol. Il arrive souvent que les habitants des locaux marchent sur une surface trop chaude, ce qui entraîne des inconvénients physiologiques graves.

Suivant l'invention, on pallie cet inconvénient par une installation ayant les caractéristiques définies à la revendication 1.

Grâce à cela, on est sûr que la température du sol ne dépassera pas un seuil prescrit généralement de 35° à 40°C.

D'autres caractéristiques de l'invention ressortent des sous-revendications.

De préférence, une vanne d'arrêt et de réglage est montée sur chaque boucle de chauffage, de manière à pouvoir court-circuiter cette boucle si l'on souhaite que la pièce à laquelle elle est affectée ne soit pas chauffée. Avantageusement, chaque vanne de réglage de débit peut être mise aussi manuellement en position d'arrêt.

2

On obtient une grande souplesse et une grande précision de fonctionnement, en ayant la possibilité d'abaisser la température pendant la nuit ou pendant une période déterminée, quand on prévoit une horloge qui commande directement les régulateurs locaux.

Afin de permettre d'isoler le collecteur du reste de l'installation, il est prévu avantageusement des vannes d'arrêt et de réglage à l'entrée et à la sortie de celui-ci. Le collecteur comporte en outre un purgeur d'air au point le plus haut et un robinet de vidange au point le plus bas. Le collecteur est placé en général dans une partie centrale du bâtiment de manière à simplifier le raccordement des boucles de chauffage et à faire en sorte que les longueurs de raccordement soient les plus petites possibles et sensiblement égales.

Le circulateur peut être une pompe classique associée à un clapet anti-thermosiphon. Il est recommandé de prévoir une dérivation qui met le conduit de retour en communication avec le deuxième conduit et sur laquelle est montée une soupape différentielle laissant passer un débit d'eau donné même lorsque toutes les vannes de réglage du débit des boucles de chauffage par le sol sont fermées, de manière à éviter une détérioration rapide de la pompe de circulation.

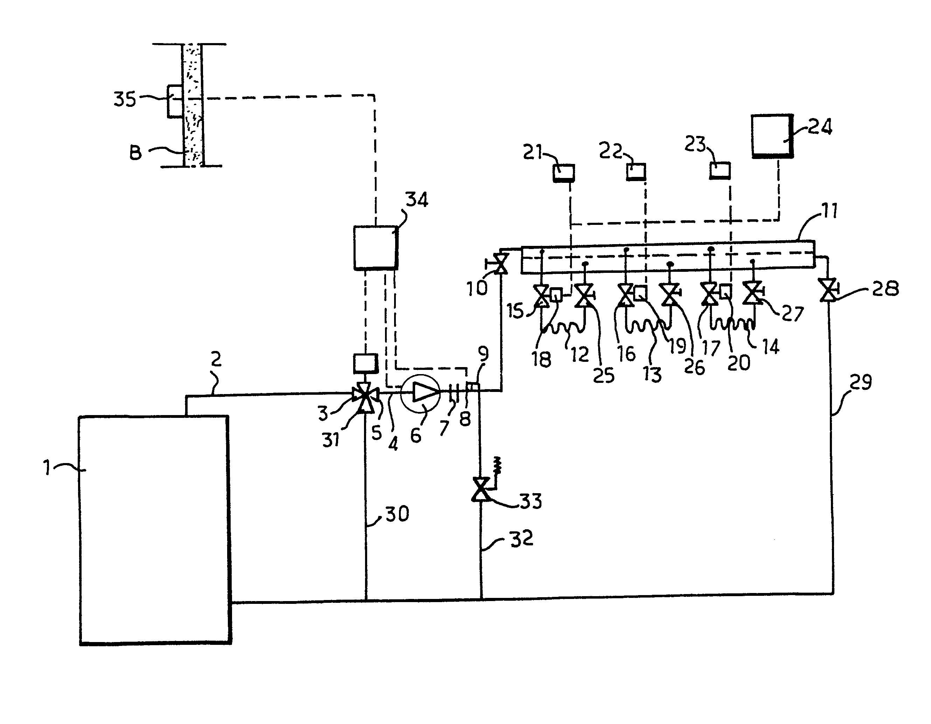

La figure unique du dessin annexé est un schéma d'une installation suivant l'invention.

L'installation de chauffage d'un bâtiment B d'habitation de trois pièces, représentée au dessin, comprend d'amont en aval une source 1 d'eau chaude, qui peut être une chaudière à mazout (gaz), une chaudière à charbon, une chaudière électrique, une pompe à chaleur, un capteur solaire ou autres. De l'eau chaude, par exemple à 75°C, sort de la source 1 par un premier conduit 2. Ce conduit 2 débouche dans la première voie 3 d'une vanne mélangeuse à trois voies. Sur un deuxième conduit 4 issu de la deuxième voie 5 de la vanne sont montés successivement d'amont en aval un circulateur 6, un clapet 47 anti-thermosiphon, une sonde 8 repérant la température de l'eau dans le deuxième conduit 4, une sonde 9 de limitation de la température, une vanne 10 d'arrêt et un collecteur 11.

Trois boucles 12, 13, 14 de chauffage par le sol sont raccordées en parallèle sur le collecteur 11. Sur chaque boucle 12, 13, 14 est montée une vanne 15, 16, 17 de réglage du débit à régulateur 18, 19, 20, local commandé par une sonde 21, 22, 23 de température. Chaque sonde 21, 22, 23 est placée dans la pièce à laquelle est affectée la boucle 12, 13, 14 de chauffage qui lui correspond. Une horloge 24 permet de modifier la commande de chaque régulateur 18, 19, 20 en fonction de la température repérée par la sonde 21, 22, 23. Dans le cas où une même et seule pièce comprendrait plusieurs branches de chauffage, une seule sonde à distance commanderait plusieurs régulateurs associés à ces branches. Sur chaque boucle 12, 13, 14 de chauffage est en outre montée une vanne 25, 26, 27 d'arrêt et d'équilibrage à double réglage de manière à équilibrer les pertes de charge de chaque boucle.

Du collecteur 11 part par une vanne 28 d'arrêt un conduit 29 de retour, qui débouche à l'entrée de la source 1. Un troisième conduit 30 de dérivation met le conduit 29 de retour en communication avec la troisième voie 31 de la vanne mélangeuse à trois voies. Une dérivation 32, sur laquelle est montée une soupape 33 différentielle, met en communication le conduit 29 de retour, en amont de l'endroit d'où est issu le troisième conduit 30, avec le deuxième conduit 4 en aval de la sonde 9 de limitation de la température.

La vanne mélangeuse à trois voies est manoeuvrée par un régulateur 34 général en fonction de la température extérieure au bâtiment repérée par une sonde 35 et, indépendamment, en fonction de la température repérée par la sonde 8. Ce n'est que par grand froid, quand il convient de combattre immédiatement l'inertie de l'installation,que la sonde 35 prend le pas sur la sonde 8 et qu'exceptionnellement la température de l'eau peut s'élever temporairement au-dessus du seuil prescrit. En outre, quand la température de l'eau dans le deuxième conduit 4 dépasse un seuil prescrit, la sonde 9 commande l'arrêt du circulateur 6 par l'intermédiaire du régulateur 34.

L'installation fonctionne de la manière suivante :

De l'eau chaude passe dans le conduit 2 et est mélangée dans la vanne à trois voies à de l'eau refroidie provenant du conduit 30 de manière à ce que l'eau circulant dans le deuxième conduit 5 ait une température de 35 à 40°C. L'eau à une température de 35 à 40°C arrive dans le collecteur 11 et se répartit entre les trois boucles 12, 13, 14 de chauffage par le sol en fonction des ouvertures des vannes 15, 16, 17 de réglage du débit telles que commandées par les régulateurs 18, 19, 20 locaux sous l'action des sondes 21, 22, 23 et, le cas échéant, de l'horloge 24.

Si la température de l'eau dans le conduit 4 s'écarte de 35 à 40°C, la sonde 8 agit sur le régulateur 34 pour modifier le rapport des débits entre les voies 3 et 30 par lesquelles arrivent respectivement de l'eau chaude et de l'eau refroidie.

## REVENDICATIONS

1. Installation de chauffage de bâtiments par le sol, comprenant une source (1) d'eau chaude, un premier conduit (2) mettant la sortie de la source (1) d'eau chaude en communication avec une première voie (3) d'une vanne mélangeuse à trois voies, un deuxième conduit (4) sur lequel est monté un circulateur (6) et qui met une deuxième voie (5) de la vanne mélangeuse en communication avec l'entrée de plusieurs boucles (12, 13, 14) de chauffage par le sol qui sont affectées respectivement à des pièces différentes du bâtiment et sur chacune desquelles est montée une vanne (15, 16, 17) commandée, par l'intermédiaire d'un régulateur local (18, 19, 20), par une sonde (21, 22, 23) de la température de la pièce du bâtiment à laquelle est affectée la boucle (12, 13, 14) de chauffage, un conduit (29) de retour mettant la sortie des boucles (12, 13, 14) de chauffage en communication avec l'entrée de la source (1) d'eau chaude et, par un troisième conduit (30) de dérivation, avec une troisième voie (31) de la vanne mélangeuse, et un régulateur (34) général manoeuvrant la vanne mélangeuse, caractérisée par une sonde (8) qui repère la température de l'eau dans le deuxième conduit (4) et qui commande le régulateur (34) général en fonction de cette température.

2. Installation suivant la revendication 1, caractérisée en ce que le deuxième conduit (4) débouche dans un collecteur (11) commun aux boucles (12, 13, 14) de chauffage par le sol qui y sont raccordées en parallèle et il est prévu une vanne (25, 26, 27) à double réglage d'arrêt et d'équilibrage montée sur chaque boucle de chauffage.

3. Installation suivant l'une des revendications 1 ou 2, caractérisée par une dérivation (32), qui met le conduit (29) de retour en communication avec le deuxième conduit et sur laquelle est montée une soupape (33) différentielle laissant passer un débit d'eau donné même lorsque toutes les vannes (15, 16, 17) de réglage du débit des boucles (12, 13, 14) de chauffage par le sol sont fermées.

4. Installation suivant l'une des revendications 1 ou 2, caractérisée en ce que les vannes (15, 16, 17) sont des vannes à réglage progressif.

5. Installation suivant l'une des revendications 1 à 4, caractérisée par une horloge (24) qui commande les régulateurs (18, 19, 20) locaux de manière à abaisser la température pendant la nuit ou pendant une période déterminée.

6. Installation suivant l'une des revendications 1 à 5, caractérisée par un clapet (7) anti-thermosiphon monté en aval du circulateur (6).

7. Installation suivant l'une des revendications 1 à 6, caractérisée par une sonde (35) de température extérieure commandant le régulateur (34) principal indépendamment de la sonde (8).

8. Installation suivant l'une des revendications 1 à 7, caractérisée par une sonde (9) repérant la température dans le deuxième conduit (5) et commandant l'arrêt du circulateur (6) lorsque cette température dépasse un seuil prescrit.

0099295